(19) Europäisches Patentamt
European Patent Office
Office européen des brevets

(11) **EP 2 483 021 B1**

(12) **EUROPÄISCHE PATENTSCHRIFT**

(45) Veröffentlichungstag und Bekanntmachung des Hinweises auf die Patenterteilung:
**22.10.2014   Patentblatt 2014/43**

(21) Anmeldenummer: **10782175.3**

(22) Anmeldetag: **30.09.2010**

(51) Int Cl.:
***B23B 27/14*** *(2006.01)*

(86) Internationale Anmeldenummer:
**PCT/AT2010/000358**

(87) Internationale Veröffentlichungsnummer:
**WO 2011/038433 (07.04.2011 Gazette 2011/14)**

(54) **SCHNEIDEINSATZ FÜR EIN SCHNEIDWERKZEUG, DESSEN VERWENDUNG UND SCHNEIDWERKZEUG DAMIT**

CUTTING INSERT FOR A CUTTING TOOL, USE THEREOF AND CUTTING TOOL THEREWITH

PLAQUETTE DE COUPE POUR UN OUTIL DE COUPE, SON UTILISATION ET OUTIL DE COUPE AVEC LA PLAQUETTE DE COUPE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **02.10.2009   AT 61209 U**

(43) Veröffentlichungstag der Anmeldung:
**08.08.2012   Patentblatt 2012/32**

(73) Patentinhaber: **Ceratizit Austria Gesellschaft M.b.H.**
**6600 Reutte (AT)**

(72) Erfinder:
• SCHLEINKOFER, Uwe
  A-6600 Reutte (AT)
• VENTURINI, Remus
  87672 Roßhaupten (DE)

(56) Entgegenhaltungen:
WO-A1-2009/005218      DE-A1- 2 357 180
JP-A- 2004 106 150      KR-A- 20010 011 938

**Beschreibung**

Die vorliegende Erfindung betrifft einen Schneideinsatz für ein Schneidwerkzeug zur spanenden Bearbeitung eines Werkstücks.

Schneideinsätze für Schneidwerkzeuge zur spanenden Bearbeitung eines Werkstücks werden insbesondere zur spanenden Bearbeitung von metallischen Werkstücken mittels Drehen eingesetzt. Es ist bekannt, derartige Schneideinsätze als Wendeschneidplatten oder Drehwendeschneidplatten auszugestalten, die eine Mehrzahl von Schneidecken und Schneidkanten aufweisen, die z.B. nacheinander eingesetzt werden können, nachdem ein Verschleiß zuerst benutzter Schneidecken und Schneidkanten aufgetreten ist. Dabei können die Schneideinsätze so ausgestaltet sein, dass sowohl eine obere Oberfläche (bzw. Oberseite) als auch eine untere Oberfläche (bzw. Unterseite) des Schneideinsatzes zur Materialbearbeitung einsetzbar ist. Die bekannten Schneideinsätze weisen oftmals eine Geometrie auf, bei der die obere Oberfläche und die untere Oberfläche in gleicher Weise strukturiert sind, insbesondere mit Schneidkanten und Spanleitelementen zum Umlenken bzw. Brechen von abgespanten Materialspänen versehen sind.

Die bekannten Schneideinsätze weisen dabei oft eine Struktur auf, die die Bewegung von abgespanten Materialspänen unabhängig von der Schnitttiefe (bzw. Spantiefe) und dem Vorschub einsinnig beeinflusst. Diese Strukturierung führt dazu, dass die Schneideinsätze für eine bestimmte Schnitttiefe und einen bestimmten Vorschub (bzw. eine bestimmte Vorschubgeschwindigkeit) optimiert sind und außerhalb des optimierten Anwendungsbereichs verschlechterte Spanbildung auftritt. Z.B. zeigen einige Schneideinsätze bei geringen Schnitttiefen eine sehr gute Spankontrolle, die mit zunehmender Schnitttiefe immer schlechter wird, und andere bei relativ großer Schnitttiefe eine gute Spankontrolle, die mit abnehmender Schnitttiefe immer schlechter wird.

KR 10-0312957 zeigt einen Schneideinsatz in Form einer Wendeschneidplatte mit einer oberen Oberfläche und einer zu dieser parallelen unteren Oberfläche, die über eine umlaufende Seitenwand miteinander verbunden sind. Der Schneideinsatz weist eine Schneidecke auf. Eine Schneidkante wird durch eine Kante im Bereich der Schneidecke und eine daran anschließenden Kante, die jeweils zwischen der oberen Oberfläche und der Seitenwand verlaufen, gebildet. Im Bereich der Schneidecke ist in der oberen Oberfläche eine Spanleitstruktur gebildet, die in der Richtung einer Symmetrieachse von der Schneidecke zu einem Zentrum des Schneideinsatzes zwei Spanleitstufen auf unterschiedlichen Höhenniveaus aufweist.

WO 2009/055218 A1, das den Oberbegriff des Anspruchs 1 offenbart, beschreibt einen Schneideinsatz mit einer oberen Oberfläche, einer unteren Oberfläche und einer Mehrzahl von Seitenoberflächen, die die obere Oberfläche und die untere Oberfläche verbinden. An einem höchsten Abschnitt der oberen Oberfläche ist eine Auflageoberfläche gebildet und an Randabschnitten der oberen Oberfläche und der Seitenoberflächen ist eine Mehrzahl von Seitenschneidkantenabschnitten gebildet. Ein Eckschneidkantenabschnitt ist an einem Randabschnitt von zwei aneinander angrenzenden Seitenschneidkantenabschnitten gebildet. Eine Schneidecke, ein Fasenabschnitt, eine nach unten geneigte Oberfläche, eine Ecken-Bodenoberfläche, eine erste nach oben geneigte Oberfläche, ein erster Vorsprung, eine zweite nach oben geneigte Oberfläche, ein zweiter Vorsprung, eine ansteigende gerillte Oberfläche und die Auflageoberfläche sind entlang einer von der Eckschneidkante zu einem Mittelloch verlaufenden Linie aufeinanderfolgend ausgebildet.

JP 2004 106 150 A beschreibt einen Schneideinsatz mit vorspringenden Abschnitten die auf der Oberfläche von einem zentralen flachen Abschnitt zu den jeweiligen Ecken vorspringen. Der jeweilige vorspringende Abschnitt ist durch drei Vorsprünge, deren Höhe stufenweise variiert, und an den Vorsprüngen vorgesehene geneigte Flächen gebildet. Die geneigten Flächen dienen als Spanbrecherwände.

Es ist Aufgabe der vorliegenden Ereindung, einen Schneideinsatz für ein Schneidwerkzeug bereitzustellen, der auch bei unterschiedlichen Vorschubgeschwindigkeiten, unterschiedlichen Schnitttiefen und unterschiedlichen zu bearbeitenden Materialien eine gute Spankontrolle bereitstellt.

Die Aufgabe wird durch einen Schneideinsatz für ein Schneidwerkzeug zur spanenden Bearbeitung eines Werkstücks nach Anspruch 1 gelöst. Soweit beschrieben ist, dass das erste, zweite bzw. dritte Plateau jeweils an die ansteigende erste, zweite bzw. dritte Fläche anschließt, ist zu beachten, dass kein unmittelbarer Anschluss (z.B. im Sinne einer scharfen Kante) erforderlich sein muss, sondern z.B. auch ein Übergang über eine gekrümmte Fläche oder ähnlich möglich ist. Im Rahmen dieser Beschreibung wird unter einem Plateau nicht nur eine vollkommen ebene Fläche verstanden, sondern ein Plateau kann auch eine gekrümmte oder gewölbte Fläche aufweisen. Das erste und/oder das zweite und/oder das dritte Plateau können z.B. flach, insbesondere parallel zu der durch die obere Oberfläche definierten Hauptebene ausgestaltet sein, aber auch z.B. eine gewölbte Struktur aufweisen. Das jeweilige Plateau weist jedoch im Vergleich mit der jeweils zugehörigen ansteigenden Fläche ein im Wesentlichen konstantes Niveau bezüglich der Richtung senkrecht zu der Hauptebene bzw. nur eine geringe Steigung auf. Soweit auf eine Hauptebene Bezug genommen wird, ist dabei auf eine plane Ebene Bezug genommen, die sich in einer Richtung erstreckt, die durch die Grundrichtung der oberen Oberfläche (ohne Berücksichtigung von deren Strukturierung im Detail) vorgegeben ist. Die Bezeichnung "obere" Oberfläche und "untere" Oberfläche werden in dem vorliegenden Zusammenhang zu der Beschreibung des Schneideinsatzes verwendet, wobei diese nur bei einer entsprechenden Ausrichtung des Schneideinsatzes tatsächlich "oben" bzw. "unten" angeordnet sind. Dementsprechend sind die Bezeichnungen "obere" und "untere" nicht beschränkend auszulegen. Da bei dem Schneideinsatz im Bereich der Schneidecke drei aufeinander folgende Spanleitstufen auf verschiedenen Niveaus vorgesehen sind, wird eine gute Span kontrolle für unterschiedliche Vorschubgeschwindigkeiten, Schnitttiefen und Materialien erreicht. Je nach Vorschubgeschwindigkeit, Schnitttiefe und Material kommen die unterschiedlichen Spanleitstufen zum Einsatz. Durch das Vorsehen der drei verschiedenen Spanleitstufen können sowohl relativ weiche metallische Materialien als auch relativ zähe metallische Materialien, wie z.B. hochfeste Edelstähle, mit guter Spankontrolle bearbeitet werden. Unter Spankontrolle werden dabei insbesondere eine definierte Spanlenkung, definierte Spanformung und definierter Spanbruch verstanden.

Gemäß einer Weiterbildung ist an der Schneidkante eine Fase vorgesehen. Diese ist insbesondere in Bezug auf eine Richtung von der Schneidkante zu dem Zentrum des Schneideinsatzes hin vor der Spanfläche angeordnet. Die Fase kann bevorzugt sowohl im Bereich der Schneidecke als auch im weiteren Verlauf der Schneidkante vorgesehen sein. Sie kann entlang der Schneidkante eine unterschiedliche Neigung und/oder eine unterschiedliche Breite aufweisen.

Gemäß einer Weiterbildung ist das erste Plateau bezüglich einer Richtung senkrecht zu der Hauptebene zumindest teilweise auf einem ersten Niveau unterhalb des (als Referenzniveau dienenden) Niveaus der Schneidkante im Bereich der Schneidecke angeordnet und das dritte Plateau ist bezüglich der Richtung senkrecht zu der Hauptebene zumindest teilweise auf einem dritten Niveau oberhalb des Niveaus der Schneidkante im Bereich der Schneidecke angeordnet. Das zweite Plateau befindet sich somit auf einem Niveau zwischen dem Niveau des ersten Plateaus und dem Niveau des dritten Plateaus. Durch diese Anordnung der Plateaus ist erreicht, dass sowohl bei kleineren Vorschüben bzw. weicheren zu bearbeitenden Materialien als auch bei größeren Vorschüben bzw. zäheren zu bearbeitenden Materialien eine gute Spankontrolle gegeben ist. Je nach Vorschubgeschwindigkeit, Schnitttiefe und Material kommen die unterschiedlichen Spanleitstufen zum Einsatz.

Gemäß einer Weiterbildung ist das zweite Plateau bezüglich der Richtung senkrecht zu der Hauptebene auf einem Niveau $h0 + h2$ oder $h0 - h2$ angeordnet, wobei $h0$ in Richtung senkrecht zu der Hauptebene das Niveau der Schneidkante im Bereich der Schneidecke ist und $h2$ mit $0 \leq h2 \leq 0{,}25$ mal $hg$ bemessen ist. Dabei ist $hg$ in Richtung senkrecht zu der Hauptebene die Differenz zwischen dem Niveau $h0$ der Schneidkante und dem Spanleitstufengrund im Bereich der Schneidecke. Diese Ausgestaltung bewirkt, dass insbesondere bei der Bearbeitung von Werkstoffen, die der Spanformung einen höheren Widerstand entgegensetzen, eine gute Spankontrolle erzielt ist.

Vorzugsweise ist das vorgenannte erste Plateau der ersten Spanleitstufe zumindest teilweise auf einem Niveau $h0 - h1$ angeordnet, wobei für $h1$ gilt: $0{,}25$ mal $hg \leq h1 \leq 0{,}75$ mal $hg$. Für die Bemessung von $hg$ gilt das oben Gesagte.

Vorzugsweise ist das vorgenannte dritte Plateau der dritten Spanleitstufe zumindest teilweise auf einem Niveau $h0 + h3$ angeordnet, wobei für $h3$ gilt: $0{,}2$ mal $hg \leq h3 \leq 1$ mal $hg$.
Für die Bemessung von $hg$ gilt das oben Gesagte.

Die vorgenannten bevorzugten Höhenniveaus für die einzelnen Spanleitstufen unterstützen die gewünschte gute Spankontrolle bei unterschiedlichen Vorschubgeschwindigkeiten, Schnitttiefen und zu bearbeitenden Materialien.

Gemäß einer Weiterbildung ist im Bereich der Schneidecke ein erhöhter Spanwinkel W vorgesehen, der mit zunehmendem Abstand von der Schneidecke in einer Richtung entlang der Schneidkante bis zu einer Erhöhung des Spanleitstufengrundes abnimmt. Durch diese Ausgestaltung ist im Bereich der Schneidecke eine Mulde im Spanleitstufengrund gebildet, die insbesondere im Bereich kleiner Schnitttiefen als Spanformer dient und eine gute Spankontrolle bewirkt. Unter einem "erhöhten" Spanwinkel wird dabei verstanden, dass die Spanfläche in diesem Bereich steiler abfällt (als beispielsweise in umliegenden Bereichen). Die Schenkel des Spanwinkels sind durch die Hauptebene und die Spanfläche gebildet.

Gemäß einer Weiterbildung nimmt der Spanwinkel in der Richtung entlang der Schneidkante nach der Erhöhung des Spanleitstufengrundes wieder zu. Durch diese Ausgestaltung ist erreicht, dass der Spanleitstufengrund im Bereich der Schneidecke ein tiefes Niveau aufweist, in dem Bereich der Erhöhung des Spanleitstufengrundes ein höheres Niveau und im weiteren Verlauf der Schneidkante wieder ein tieferes Niveau. In dieser Weise wird auch bei höheren Schnitttiefen eine gute Spankontrolle bereitgestellt. Bevorzugt weist der Spanwinkel im Bereich der Schneidecke den größten Wert auf, im Bereich der Erhöhung den kleinsten Wert und im Bereich nach der Erhöhung einen dazwischen liegenden Wert.

Gemäß einer Weiterbildung hat die Erhöhung des Spanleitstufengrundes bezüglich der Richtung senkrecht zu der Hauptebene in einem Bereich, in dem die erste Spanleitstufe den geringsten Abstand zu der Schneidkante aufweist, die niedrigste Höhendifferenz zu dem (Referenz-) Niveau der Schneidkante im Bereich der Schneidecke. Der Spanleitstufengrund weist in diesem Bereich somit die geringste Tiefe auf. In dieser Weise ist durch das Zusammenwirken der Spanleitstufen mit einem sich ändernden Spanwinkel eine gute Spankontrolle auch für große Schnitttiefen erreicht. Die Späne können kontrolliert abfließen und eine gerichtete Spanflussrichtung ist gewährleistet.

Gemäß einer Weiterbildung ist die größte Höhendifferenz bezüglich der Richtung senkrecht zu der Hauptebene zwischen dem Niveau der Schneidkante im Bereich der Schneidecke und dem Niveau des Spanleitstufengrundes im Bereich der Schneidecke gegeben. Durch diese Ausgestaltung befindet sich der Spanleitstufengrund im Bereich der Schneidecke auf dem tiefsten Niveau, sodass im Bereich kleiner Schnitttiefen aufgrund der gebildeten Mulde eine gute Spankontrolle erzielt ist. In weiteren bevorzugten Ausführungsformen können andere entlang der Schneidkante angeordnete Abschnitte des Spanleitstufengrundes im Wesentlichen die gleiche Höhendifferenz zum Niveau der Schneidkante im Bereich der Schneidecke aufweisen wie der Spanleitstufengrund im Bereich der Schneidecke.

Gemäß einer Ausgestaltung verlaufen die Oberflächen des ersten Plateaus, des zweiten Plateaus und des dritten Plateaus jeweils im Wesentlichen parallel zu der Hauptebene.

Gemäß einer bevorzugten Ausgestaltung ist der Schneideinsatz eine Wendeschneidplatte, die zumindest eine zweite Schneidecke aufweist.

Es ist zu beachten, dass - je nach Umfangsform des als Wendeschneidplatte ausgebildeten Schneideinsatzes - unterschiedlich viele Schneidecken vorgesehen sein können, z.B. zwei Schneidecken bei einer rhombischen Wendeschneidplatte an der oberen Oberfläche, drei Schneidecken bei einer dreieckigen Wendeschneidplatte an der oberen Oberfläche, vier Schneidecken bei einer rechteckigen Wendeschneidplatte an der oberen Oberfläche, etc. Bevorzugt weist der Schneideinsatz dabei in Aufsicht eine im Wesentlichen polygonale Grundform auf. Der Schneideinsatz kann dabei bevorzugt symmetrisch (zu einer oder mehreren Symmetrieebenen) aufgebaut sein, sodass die Schneidecken übereinstimmende Strukturen aufweisen. Bevorzugt sind die Schneidecken bezüglich einer Winkelhalbierenden jeweils symmetrisch aufgebaut.

Gemäß einer Weiterbildung ist der Schneideinsatz als Wendeschneidplatte ausgebildet, bei der auch die untere Oberfläche zur spanenden Bearbeitung eines Werkstücks ausgebildet ist. In diesem Fall ist die Anzahl der zur Werkstoffbearbeitung zur Verfügung stehenden Schneidecken (verglichen mit einem Schneideinsatz, bei dem nur die obere Oberfläche zur Werkstückbearbeitung dient) verdoppelt. Insbesondere kann die untere Oberfläche des Schneideinsatzes identisch zu der oberen Oberfläche ausgebildet sein. Bevorzugt ist das dritte Plateau als Auflagefläche für den Schneideinsatz im Schneidwerkzeug, wenn die untere Oberfläche zur spanenden Bearbeitung eingesetzt wird, ausgebildet. Bei dieser Realisierung erfüllt das dritte Plateau eine Doppelfunktion, einerseits als Teil der dritten Spanleitstufe bei einer Werkstoffbearbeitung mit der oberen Oberseite und andererseits als Auflagefläche bei einer Werkstoffbearbeitung mit der unteren Oberfläche.

Die zweite Spanleitstufe ist in einer Querrichtung senkrecht zu der radialen Richtung (die von der Schneidecke zu dem Zentrum des Schneideinsatzes verläuft) schmaler als die erste Spanleitstufe. Durch diese Ausgestaltung wird mit der zweiten Spanleitstufe insbesondere bei der Bearbeitung von zäheren Werkstoffen eine gute Spankontrolle erreicht.

Gemäß einer Ausgestaltung ist der Schneideinsatz für eine spanende Bearbeitung mittels Drehen ausgebildet.

Die Aufgabe wird auch durch die Verwendung eines erfindungsgemäßen Schneideinsatzes zur Bearbeitung eines Werkstücks durch Drehen gelöst.

Weitere Vorteile und Weiterbildungen ergeben sich aus der nachfolgenden Beschreibung eines Ausführungsbeispiels unter Bezugnahme auf die Figuren.

Fig. 1     zeigt einen Schneideinsatz gemäß dem Ausführungsbeispiel in Aufsicht

Fig. 2     zeigt einen vergrößerten Ausschnitt im Bereich einer Schneidecke von Fig. 1

Fig. 3     zeigt beispielhaft den Einsatz eines rechteckigen Schneideinsatzes in einem Schneidwerkzeug

Fig. 4     zeigt einen Ausschnitt aus einem Schnitt entlang der Linie C-C in Fig. 1 im Bereich der Schneidecke

Fig. 5     zeigt einen Ausschnitt aus einem Schnitt entlang der Linie D-D in Fig. 1 im Bereich der Schneidkante

Fig. 6     zeigt einen Ausschnitt aus einem Schnitt entlang der Linie G-G in Fig. 1 im Bereich der Schneidkante

Fig. 7     zeigt einen Ausschnitt aus einem Schnitt entlang der Linie E-E in Fig. 1 im Bereich der Schneidkante

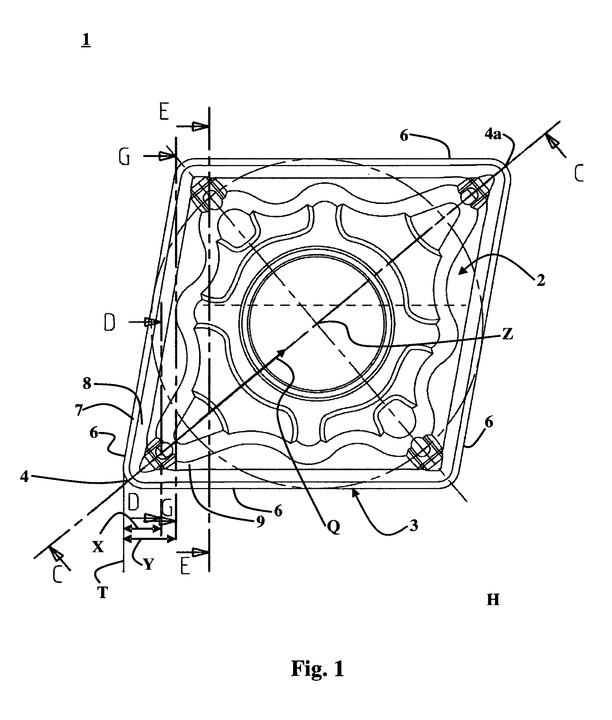

Im Folgenden wird eine Ausführungsform unter Bezugnahme auf die Figuren beschrieben. Fig. 1 zeigt eine Aufsicht auf einen Schneideinsatz -1- gemäß der Ausführungsform. Der Schneideinsatz -1- gemäß dem Ausführungsbeispiel ist als eine Wendeschneidplatte ausgebildet. Der Schneideinsatz -1- weist eine obere Oberfläche -2- (in Fig. 1 gezeigt) und eine auf der (nicht gezeigten) Rückseite des Schneideinsatzes -1- angeordnete untere Oberfläche auf. Es ist zu beachten, dass die Verwendung der Bezeichnungen "untere" Oberfläche und "obere" Oberfläche eine bestimmte Ausrichtung des Schneideinsatzes voraussetzt, die zur besseren Verständlichkeit der nachfolgenden Beschreibung gewählt wurde und keine Beschränkung darstellen soll. Dabei kann sich die "untere" Oberfläche bezüglich der "oberen" Oberfläche" je nach Ausrichtung des Schneideinsatzes selbstverständlich auch seitlich oder oberhalb von dieser befinden.

Die untere Oberfläche ist bei dem Ausführungsbeispiel identisch zu der oberen Oberfläche -2- ausgebildet und im Wesentlichen (abgesehen von den jeweiligen Oberflächenstrukturierungen) parallel zu dieser angeordnet. Die untere Oberfläche und die obere Oberfläche -2- sind durch eine umlaufende Seitenwand -3- miteinander verbunden, sodass ein Körper des Schneideinsatzes -1- durch die untere Oberfläche, die obere Oberfläche -2- und die Seitenwand -3- umgrenzt ist.

Die obere Oberfläche -2- erstreckt sich (abgesehen von den Oberflächenstrukturierungen, die noch eingehender beschrieben werden) in einer Hauptebene H, die parallel zu der Zeichnungsfläche von Fig. 1 verläuft. Die Richtung senkrecht zu der Hauptebene H (und damit senkrecht zu der Zeichnungsfläche von Fig. 1) wird im Folgenden mit dem Bezugszeichen R bezeichnet. Der Schneideinsatz -1- weist eine in Aufsicht polygonale Umfangsform auf, die bei dem dargestellten Ausführungsbeispiel durch eine rhombische Form mit abgerundeten Ecken gebildet ist. In einem Zentrum Z des Schneideinsatzes -1- ist eine durchgehende Bohrung zwischen der oberen Oberfläche -2- und der unter Oberfläche zur Befestigung des Schneideinsatzes an einem Schneidwerkzeug ausgebildet. Der Schneideinsatz -1- gemäß dem Ausführungsbeispiel ist als Schneideinsatz zur Materialbearbeitung durch Drehen in einem Drehwerkzeug ausgebildet. Der Schneideinsatz -1- ist zur spanenden Bearbeitung von metallischen Werkstoffen ausgebildet und aus Hartmetall gefertigt.

Der in Fig. 1 dargestellte Schneideinsatz -1- weist an gegenüberliegenden Ecken zwischen der umlaufenden Seitenwand -3- und der oberen Oberfläche -2- identisch ausgestaltete Schneidecken -4- und -4a- auf, von denen nur eine Schneidecke -4- (in Fig. 1 links unten dargestellt) eingehender beschrieben wird. Die Schneidecken -4- und -4a- weisen jeweils in Umfangsrichtung eine Abrundung mit einem Radius r auf. Eine Kante im Bereich der Schneidecken -4- und -4a-, die zwischen der Seitenwand -3- und der oberen Oberfläche -2- verläuft, ist als Schneidkante zur spanenden Bearbeitung eines Werkstücks ausgebildet. Die beidseitig an die Schneidecken -4- und -4a- angrenzenden Kanten -6-, die zwischen der Seitenwand -3- und der oberen Oberfläche -2- verlaufen, sind ebenfalls als Schneidkanten zur spanenden Bearbeitung des Werkstücks ausgebildet. Die Schneidkante insgesamt wird im Folgenden mit dem Bezugszeichen -5-bezeichnet. Bei dem dargestellten Ausführungsbeispiel ist der Schneideinsatz -1- symmetrisch bezüglich einer Verbindungslinie zwischen der Schneidecke -4- und der Schneidecke -4a- durch das Zentrum Z ausgebildet. Aus diesem Grund wird im Folgenden nur die Struktur der oberen Oberfläche -2- auf einer Seite der Verbindungslinie (der unteren Seite in Fig. 1) beschrieben. Die Verbindungslinie entspricht auch gleichzeitig einer radialen Richtung Q von der Schneidecke -4- zu dem Zentrum Z des Schneideinsatzes -1-. Die Schneidkante -5- kann in ihrem Verlauf von der jeweiligen Schneidecke -4- bzw. -4a- entlang der Kante -6- ein konstantes Niveau (d.h. eine konstante Höhe) in der Richtung R senkrecht zu der Hauptebene H aufweisen oder aber auch in ihrem Verlauf ein veränderliches Niveau aufweisen. Um diesen unterschiedlichen Möglichkeiten Rechnung zu tragen, wird im Folgenden das Niveau -h0- der Schneidkante -5- im Bereich der Schneidecke -4- (insbesondere an dem Punkt, an dem die radiale Richtung Q die Schneidecke -4- schneidet) als Referenzniveau verwendet.

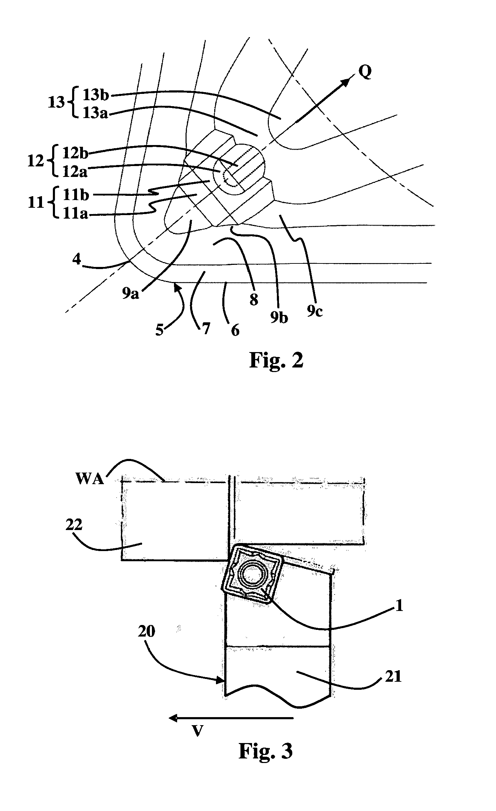

Die Schneidkante -5- ist in ihrem äußeren Bereich sowohl an der Schneidecke -4- als auch im weiteren Verlauf der Kante -6- in an sich bekannter Weise mit einer Fase -7- versehen. In Richtung des Zentrums Z schließt sich an die Fase -7- eine abfallende Spanfläche -8- an, deren Neigungswinkel den jeweiligen Spanwinkel des Schneideinsatzes -1- in den verschiedenen Bereichen bestimmt. Der Schneideinsatz -1- gemäß dem Ausführungsbeispiel weist von der Schneidecke -4- ausgehend entlang der Kante -6- verschiedene Spanwinkel W auf, wie im Folgenden noch eingehender beschrieben wird. In Richtung des Zentrums Z schließt sich an die Spanfläche -8- der Spanleitstufengrund -9- (-9a-, 9b-, -9c-) an, der in Richtung des Zentrums Z jeweils das tiefste Niveau spanformender Strukturen in den jeweiligen Bereichen bildet. Wie in Fig. 2 zu erkennen ist, sind der Spanleitstufengrund -9a- im Bereich der Schneidecke -4- und der Spanleitstufengrund -9c- in einem Bereich der Kante -6-, der sich relativ weit von der Schneidecke -4- entfernt befindet, jeweils flächig ausgebildet. In einem dazwischen liegenden Bereich ist der Spanleitstufengrund -9b- hingegen linienförmig ausgebildet.

Im Bereich der Schneidecke -4- sind bei dem Ausführungsbeispiel drei Spanleitstufen ausgebildet, eine erste Spanleitstufe -11-, eine zweite Spanleitstufe -12- und eine dritte Spanleitstufe -13-. In Fig. 2 ist zur Verdeutlichung der einzelnen Strukturen der zweiten Spanleitstufe -12- der Übergang zwischen einer zweiten ansteigenden Fläche -12a- und einem zweiten Plateau -12b- durch eine gestrichelte Linie gekennzeichnet.

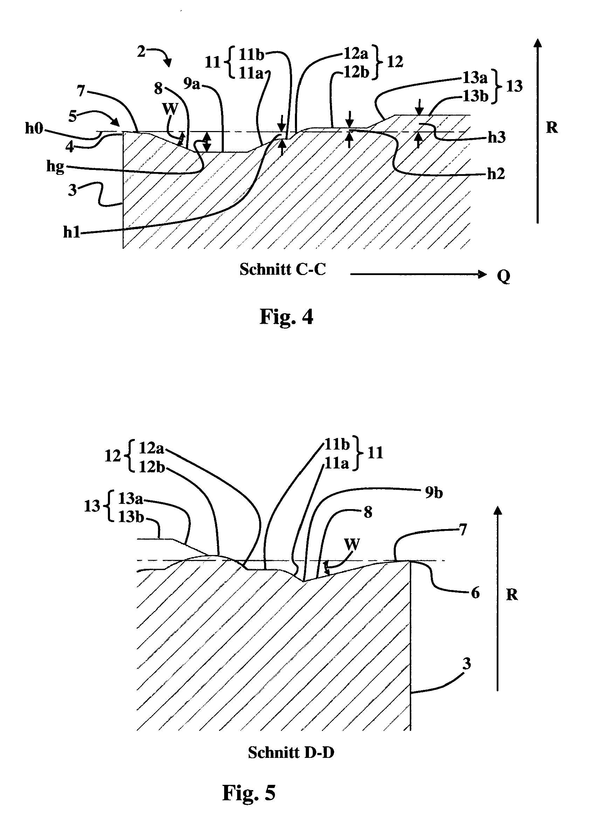

Der Verlauf der drei Spanleitstufen ausgehend von der Schneidecke -4- in einer Richtung zu dem Zentrum Z wird unter Bezug auf Fig. 2 und Fig. 4 beschrieben. In dem Bereich der Schneidecke -4- befindet sich der Spanleitstufengrund -9a-auf einem Niveau, das um eine Höhe -hg- unterhalb des Niveaus -h0- der Schneidkante -5- im Bereich der Schneidecke -4- liegt. In Richtung Zentrum Z schließt sich an den Spanleitstufengrund -9a- die erste Spanleitstufe -11- an, die eine erste ansteigende Fläche -11 a- und ein daran anschließendes erstes Plateau -11 b- aufweist. Wie in Fig. 4 zu sehen ist, befindet sich das erste Plateau -11 b- auf einem Niveau, das um eine Höhe -h1- unterhalb des Niveaus -h0- der Schneidkante -5- im Bereich der Schneidecke -4- liegt. Die Höhe -h1- liegt dabei in einem Bereich: 0,25 mal hg $\leq$ h1 $\leq$ 0,75 mal hg. Von dem Niveau des ersten Plateaus -11 b- ausgehend schließt sich daran die zweite Spanleitstufe -12- an, die eine zweite ansteigende Fläche -12a- und ein daran anschließendes zweites Plateau -12b- aufweist. Das zweite Plateau -12b-befindet sich auf einem Niveau, das in etwa auf der Höhe des Niveaus -h0- liegt, insbesondere um eine Höhe -h2- oberhalb oder unterhalb des Niveaus -h0-. -h2- hat dabei einen Wert in dem Bereich:

0 mal hg $\leq$ h2 $\leq$ 0,25 mal hg. Von dem Niveau des zweiten Plateaus -12b-ausgehend schließt sich daran die dritte Spanleitstufe -13- an, die eine dritte ansteigende Fläche -13a- und ein daran anschließendes drittes Plateau -13b-aufweist. Das dritte Plateau -13b- befindet sich auf einem Niveau um eine Höhe --h3- oberhalb des Niveaus -h0-. Die Höhe -h3- hat einen Wert in dem Bereich: 0,2 mal hg $\leq$ h3 $\leq$ 1 mal hg. Bei den beschriebenen Wertebereichen für -h1-, -h2- und -h3- ist zu beachten, das das erste Plateau -11 b- auf jeden Fall tiefer als das zweite Plateau -12b- liegen muss und das zweite Plateau -12b- tiefer als das dritte Plateau -13b-. Die Höhe -hg- kann beispielsweise 0,18 mm betragen. Bei dem dargestellten Ausführungsbeispiel ist das dritte Plateau -13b- derart ausgestaltet, dass es bei der Bearbeitung eines Werkstücks mit der unteren Oberfläche des Schneideinsatzes -1- eine Auflagefläche für den Schneideinsatz -1- in einem Schneidwerkzeug bildet.

Im Folgenden wird mit Bezug auf Fig. 5 ein Verlauf der einzelnen Strukturen in einem Schnitt in der Richtung D-D von Fig. 1 beschrieben. Der Schnitt verläuft in einer Ebene senkrecht zu der Kante -6- in einem Bereich, in dem das erste Plateau -11 b- der ersten Spanleitstufe -11- den geringsten Abstand zu der Schneidkante -5-aufweist. Ausgehend von der Kante -6- ist in einem an die Kante -6- anschließenden Bereich zunächst die Fase -7- vorgesehen, die eine andere Neigung und/oder Breite als im Bereich der Schneidecke -4- aufweisen kann. An die Fase -7- anschließend ist die Spanfläche -8- angeordnet, die einen deutlich flacheren Spanwinkel W bildet, als im zuvor beschriebenen Bereich der Schneidecke -4-. Der sich anschließende Spanleitflächengrund -9b- ist in diesem Bereich nur linienförmig ausgebildet und befindet sich auf einem deutlich höheren Niveau als der Spanleitflächengrund -9a- im Bereich der Schneidecke -4-. Wie aus der folgenden Beschreibung noch näher hervorgeht, bildet dieser Bereich des Spanleitflächengrundes -9b- die maximale Höhe einer Erhöhung des Spanleitflächengrundes -9-. Die erste Spanleitstufe -11- schließt sich mit der ersten ansteigenden Fläche -11 a- und dem ersten Plateau -11b-an. Anschließend erhebt sich von dem ersten Plateau -11 b- die zweite Spanleitstufe -12- mit der zweiten ansteigenden Fläche -12a- und dem zweiten Plateau -12b-.

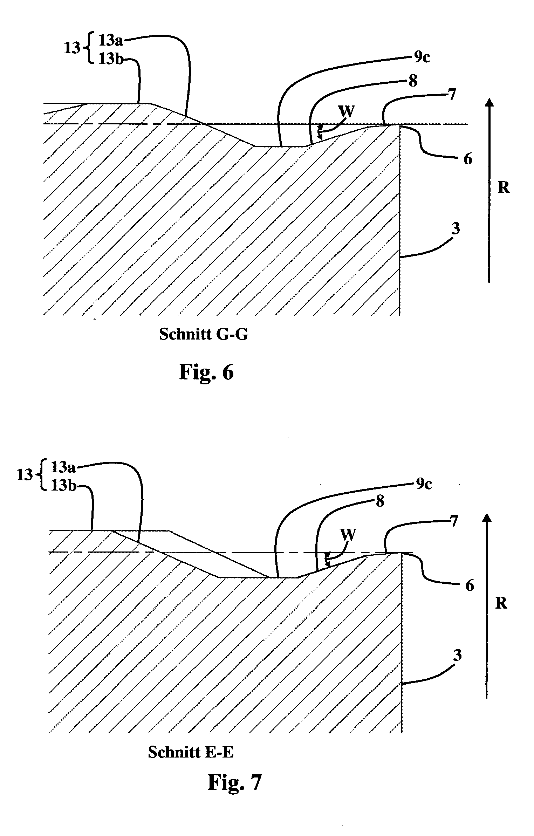

Nachfolgend wird mit Bezug auf Fig. 6 ein Verlauf der einzelnen Strukturen in einem Schnitt in der Richtung G-G von Fig. 1 beschrieben. Dieser Schnitt verläuft in einer Ebene senkrecht zu der Kante -6- in einem Bereich, in dem die erste Spanleitstufe -11- und die zweite Spanleitstufe -12- nicht mehr geschnitten werden. Er befindet sich in der Richtung entlang der Kante -6-genau in dem Bereich, in dem die erste Spanleitstufe -11- endet (und die erste ansteigende Fläche -11 a- der ersten Spanleitstufe -11- mit der dritten ansteigenden Fläche -13a- der dritten Spanleitstufe -13- schneidet). Ausgehend von der Kante -6- ist wiederum zuerst die Fase -7- gebildet, die eine andere Neigung und/oder Breite als in den zuvor beschriebenen Bereichen aufweisen kann. An die Fase -7- anschließend ist die Spanfläche -8- ausgebildet, die in diesem Bereich einen Spanwinkel W aufweist, der wieder größer ist als in dem zuvor (unter Bezug auf Fig. 5) beschriebenen Bereich, in dem die Erhöhung des Spanleitstufengrundes gebildet ist. Der sich an die Spanfläche -8-anschließende Spanleitstufengrund -9c- befindet sich wieder auf einem deutlich tieferen Niveau als der Spanleitstufengrund -9b- in dem Bereich, in dem die Erhöhung des Spanleitstufengrundes -9- gebildet ist. Z.B. kann sich der Spanleitstufengrund -9c- wieder in etwa auf dem Niveau des Spanleitstufengrundes -9a- im Bereich der Schneidecke -4- oder auf einem etwas höheren Niveau befinden.

Mit Bezug auf Fig. 7 wird im Folgenden noch kurz ein Verlauf der einzelnen Strukturen in einem Schnitt in der Richtung E-E von Fig. 1 beschrieben. Es handelt sich um einen Schnitt in einem Bereich der Kante -6-, der noch weiter von der Schneidecke -4- entfernt ist als der zuvor unter Bezugnahme auf Fig. 6 beschriebene Bereich. Wie in Fig. 7 zu sehen ist, weist der Spanleitflächengrund -9c- in diesem Bereich eine deutlich größere Breite auf. Der Spanleitflächengrund -9c- kann sich in diesem Bereich wieder in etwa auf dem Niveau des Spanleitstufengrundes -9a- in dem Bereich der Schneidecke -4- befinden. Der durch die Spanfläche -8- bestimmte Spanwinkel W kann z.B. in der gleichen Größenordnung wie in dem zuvor beschriebenen Bereich des Schnittes G-G liegen.

Es wurde somit ein Schneideinsatz -1- für ein Schneidwerkzeug zur spanenden Bearbeitung eines Werkstücks beschrieben, bei dem im Bereich einer Schneidecke -4- drei Spanleitstufen (erste Spanleitstufe -11-, zweite Spanleitstufe -12-, dritte Spanleitstufe -13-) vorgesehen sind, die jeweils ansteigende Flächen und Plateaus aufweisen. Die Plateaus (-11b-, -12b-, -13b-) sind dabei auf unterschiedliche Höhenniveaus bezüglich einer Richtung R senkrecht zu der Hauptebene H angeordnet. Insbesondere befindet sich das erste Plateau -11 b- auf einem Niveau unterhalb des Referenzniveaus -h0- der Schneidkante -5- im Bereich der Schneidecke -4-, das zweite Plateau -12b- befindet sich in etwa auf dem Referenzniveau -h0- und das dritte Plateau -13b- befindet sich auf einem deutlich höheren Niveau. Die unterschiedlichen Höhenniveaus der Plateaus stellen bei verschiedenen Vorschubgeschwindigkeiten, Schnitttiefen und Materialien jeweils eine gute Spankontrolle bereit. Im Bereich der Schneidecke -4- ist ferner ein erhöhter Spanwinkel W vorgesehen, der mit zunehmendem Abstand von der Schneidecke -4- zunächst abnimmt, sodass im Bereich der Schneidecke -4-eine Vertiefung des Spanleitstufengrundes -9- gebildet ist. Diese Vertiefung des Spanleitstufengrundes -9- im Bereich der Schneidecke -4- bildet in Verbindung mit der ersten Spanleitstufe -11- eine Mulde, die im Bereich kleiner Schnitttiefen als Spanformer wirkt und eine gute Spankontrolle bewirkt.

Aufgrund der beschriebenen geometrischen Ausgestaltung entsteht in der Richtung entlang der Schneidkante -5- von der Schneidecke -4- weg eine Erhöhung des Spanleitstufengrundes -9-. Bei einer symmetrischen Ausgestaltung der Schneidecke -4- bezüglich der Verbindungslinie zu dem Zentrum Z, wie bei dem beschriebenen Ausführungsbeispiel, sind diese Merkmale auf beiden Seiten der Schneidecke -4- gebildet. Die Erhöhung des Spanleitstufengrundes -9- (in dem Bereich des Spanleitstufengrundes -9b-) unterstützt die Spanführung bei größeren Schnitttiefen. Die Erhöhung des Spanleitstufengrundes hat ihr höchstes Niveau in dem Bereich, in dem das erste Plateau -11 b- der ersten Spanleitstufe -11- den geringsten Abstand zu der Schneidkante -5- aufweist. Mit weiter zunehmendem Abstand von der Schneidecke -4- erhöht sich der Spanwinkel W wieder und der Abstand zwischen der Schneidkante -5- und dem ersten Plateau -11 b- nimmt wieder zu. Es wird somit in diesem Bereich wieder eine Absenkung des Spanleitstufengrundes -9- erreicht. Diese Struktur führt zu einer guten Spankontrolle. Das Höhenniveau des ersten Plateaus -11 b- liegt unterhalb des Referenzniveaus h0-. Die zweite Spanleitstufe -12- ist auf die erste Spanleitstufe -11- aufgesetzt, wobei sie entlang der radialen Richtung Q in Richtung Zentrum Z zu der ersten Spanleitstufe -11- versetzt angeordnet ist. Die zweite Spanleitstufe -12- liegt auf einem Niveau, das in etwa dem Referenzniveau -h0- entspricht, und weist in der Querrichtung senkrecht zu der radialen Richtung Q eine geringere Breite als die erste Spanleitstufe -11- auf. Bei Werkstoffen, die der Spanformung einen höheren Widerstand entgegensetzen, trifft der Span auf das zweite Plateau -12b- auf und wird dort geformt. Die dritte Spanleitstufe -13- schließt sich an die zweite Spanleitstufe 12- an. Der durch die dritte Spanleitstufe -13- gebildete Rücken stellt für hohe Schnitttiefen eine gute Spankontrolle sicher. In Verbindung mit der Erhöhung des Spanleitstufengrundes -9- an der engsten Stelle zwischen dem ersten Plateau -11 b- und der Schneidkante -5- ist gewährleistet, dass auch bei hohen Schnitttiefen die Späne kontrolliert abfließen können und eine gerichtete Spanflussrichtung gegeben ist.

Im Zusammenspiel der beschriebenen Strukturen ergibt sich somit eine gute Spankontrolle in unterschiedlichen Anwendungsbereichen.

Der Spanwinkel W im Bereich der Schneidecke -4- liegt bevorzugt in einem Bereich zwischen 15° und 25°. Der Spanwinkel W wird insbesondere durch den Winkel zwischen der Spanfläche -8- und der Hauptebene H bestimmt. Die beschriebene Reduktion des Spanwinkel W s von dem Bereich der Schneidecke -4- zu dem in Schnitt D-D gezeigten Bereich, in dem das erste Plateau -11 b- den geringsten Abstand zu der Schneidkante -5- aufweist, liegt bevorzugt in dem Bereich zwischen 5% und 30%. Die Schneidecke -4- weist einen Eckenradius R auf, der z.B. in einem Bereich zwischen 0,2 mm und 2,4 mm liegt. Er kann beispielsweise z.B. 0,2 mm, 0,4 mm, 0,8 mm, 1,2 mm, 1,6 mm oder 2,4 mm betragen.

In Fig. 1 ist eine Tangente T dargestellt, die sich in der Hauptebene H in einer Richtung senkrecht zu der Richtung der (in Fig. 1 unten dargestellten) Kante -6- erstreckt und den in Bezug auf die Richtung der Kante -6- äußersten Punkt der Schneidecke -4- berührt. Der Abstand des Bereichs der Erhöhung des Spanleitstufengrundes -9-, in dem das erste Plateau -11 b- den geringsten Abstand zu der Schneidkante -5- aufweist, zu der Tangente T ist als X definiert. Der Wert dieses Abstands X liegt bevorzugt in dem Bereich:

$$1 \text{ mal } r \leq X \leq 4 \text{ mal } r.$$

Der Abstand zwischen der (zuvor beschriebenen) Tangente T und der Schnittebene G-G ist in Fig. 1 mit Y definiert. Die Schnittebene G-G führt dabei durch einen Punkt, in dem sich das untere Ende der ansteigenden Fläche -11a- der ersten Spanleitstufe -11- und das untere Ende der ansteigenden Fläche -13a- der dritten Spanleitstufe -13- schneiden. Y weist bevorzugt einen Wert in dem folgenden Bereich auf: $1,5 \text{ mal } r \leq Y \leq 6 \text{ mal } r$. Dabei muss jedoch gelten: $X < Y$.

Der Eckenwinkel der Schneidecke -4- (Winkel zwischen den jeweils anschließenden Kanten -6-) liegt bevorzugt in dem Bereich zwischen 30° und 90°.

Bei dem Ausführungsbeispiel weist die Fase -7- im Bereich der Schneidecke -4- eine andere Breite (in der Richtung senkrecht zur Schneidkante -5-) auf als im Bereich des weiteren Verlaufs der Kanten -6-. Die Fase -7- dient zur Stabilisierung der Schneidkante -5- in ihrem Verlauf. Die Fase -7- ist bei dem Ausführungsbeispiel im Bereich der Schneidecke -4- schmal und ihre Breite nimmt ab dem Bereich der Erhöhung des Spanleitstufengrundes -9- (Position der Schnittebene D-D in Fig. 1) zu. Durch diese Ausgestaltung ist erreicht, dass der Schneideinsatz für den Bereich kleiner Schnitttiefen schnittig ist und die Schneidkante für den Bereich großer Spantiefen vor Ausbrüchen geschützt ist. Die Breite der Fase -7- liegt bevorzugt in einem Bereich zwischen 0,1 mm und 0,35 mm. Der Unterschied in der Breite zwischen dem Bereich der Schneidecke -4- und dem entfernten Bereich der Kante -6- liegt bevorzugt zwischen 10% und 30%.

Fig. 3 zeigt beispielhaft eine Verwendung eines Schneideinsatzes -1- in einem Schneidwerkzeug -20- zum spanenden Bearbeiten eines Werkstücks. In Fig. 3 ist beispielhaft ein Schneideinsatz -1- mit einer rechteckigen Querschnittsform dargestellt, Schneideinsätze mit einer in den Fig. 1 und Fig. 2 dargestellten Querschnittsform werden jedoch in vergleichbarer Weise eingesetzt. Der Schneideinsatz -1- ist in einer Werkzeughalterung -21- befestigt und wird zur Bearbeitung eines Werkstücks -22- durch Drehen verwendet. Dabei dreht sich das zu bearbeitende Werkstück -22- um eine Achse WA und wird dabei mit dem Schneideinsatz -1- bearbeitet, der in einer Vorschubrichtung V bewegt wird.

**Patentansprüche**

1. Schneideinsatz (1) für ein Schneidwerkzeug zur spanenden Bearbeitung eines Werkstücks; mit:

einer oberen Oberfläche (2), deren Hauptausrichtung eine Hauptebene (H) bestimmt, einer unteren Oberfläche und einer zwischen der oberen Oberfläche (2) und der unteren Oberfläche umlaufenden Seitenwand (3), wobei zumindest eine in Umfangsrichtung gerundete Ecke gebildet ist, die zumindest auf der Seite der oberen Oberfläche (2) als eine Schneidecke (4) ausgebildet ist, wobei
eine Kante im Bereich der Schneidecke (4) und zumindest eine an die Schneidecke (4) anschließende Kante (6), die jeweils zwischen der Seitenwand (3) und der oberen Oberfläche (2) verlaufen, eine Schneidkante (5) bilden;
wobei in einer radialen Richtung (Q), die in der Hauptebene (H) von der Schneidecke (4) zu einem Zentrum (Z) des Schneideinsatzes (1) verläuft, in der folgenden Reihenfolge ausgebildet sind:

eine abfallende Spanfläche (8),
ein an die Spanfläche anschließender Spanleitstufengrund (9; 9a),
eine an den Spanleitstufengrund (9; 9a) anschließende erste Spanleitstufe (11) mit einer gegenüber dem Spanleitstufengrund (9; 9a) ansteigenden ersten Fläche (11a) und einem daran anschließenden ersten Plateau (11b),
eine zweite Spanleitstufe (12) mit einer gegenüber dem ersten Plateau (11 b) ansteigenden zweiten Fläche (12a) und einem daran anschließenden zweiten Plateau (12b), und
eine dritte Spanleitstufe (13) mit einer gegenüber dem zweiten Plateau (12b) ansteigenden dritten Fläche (13a) und einem daran anschließenden dritten Plateau (13b), **dadurch gekennzeichnet, dass** die zweite Spanleitstufe (12) in einer senkrecht zu der radialen Richtung (Q) und parallel zur Hauptebene (H) verlaufenden Querrichtung schmaler als die erste Spanleitstufe (11) ist.

2. Schneideinsatz nach Anspruch 1, wobei an der Schneidkante (5) eine Fase (7) vorgesehen ist.

3. Schneideinsatz nach Anspruch 1 oder 2, wobei das erste Plateau (11b) bezüglich einer Richtung (R) senkrecht zu der Hauptebene (H) zumindest teilweise auf einem ersten Niveau unterhalb des Niveaus (h0) der Schneidkante (5) im Bereich der Schneidecke (4) und das dritte Plateau (13b) bezüglich der Richtung (R) senkrecht zu der Hauptebene (H) zumindest teilweise auf einem dritten Niveau oberhalb des Niveaus (h0) der Schneidkante (5) im Bereich der Schneidecke (4) angeordnet sind.

4. Schneideinsatz nach einem der vorhergehenden Ansprüche, wobei das zweite Plateau (12b) bezüglich einer Richtung (R) senkrecht zu der Hauptebene (H) zumindest teilweise auf dem Niveau h0 + h2 oder h0 - h2 angeordnet ist und wobei

- $0 \leq h2 \leq 0{,}25$ mal hg,
- h0 das Niveau der Schneidkante (5) in Richtung (R) im Bereich der Schneidecke (4) ist,
- hg in Richtung (R) im Bereich der Schneidecke (4) die Differenz zwischen dem Niveau (h0) der Schneidkante (5) und dem Spanleitstufengrund (9a) ist.

5. Schneideinsatz nach einem der vorhergehenden Ansprüche, wobei im Bereich der Schneidecke (4) ein Spanwinkel (W) vorgesehen ist, der mit zunehmendem Abstand von der Schneidecke (4) in einer Richtung entlang der Schneidkante (5) bis zu einer Erhöhung des Spanleitstufengrundes (9b) abnimmt und wobei der Spanwinkel (W) zwischen der Hauptebene (H) und der Spanfläche (8) gebildet ist.

6. Schneideinsatz nach Anspruch 5, wobei der Spanwinkel (W) in der Richtung entlang der Schneidkante (5) nach der Erhöhung des Spanleitstufengrundes (9b) wieder zunimmt.

7. Schneideinsatz nach Anspruch 5 oder 6, wobei die Erhöhung des Spanleitstufengrundes (9b) bezüglich der Richtung (R) senkrecht zu der Hauptebene (H) in einem Bereich, in dem die erste Spanleitstufe (11) den geringsten Abstand zu der Schneidkante (5) aufweist, die niedrigste Höhendifferenz zu dem Niveau (h0) der Schneidkante (5) im Bereich der Schneidecke (4) hat.

8. Schneideinsatz nach einem der vorhergehenden Ansprüche, wobei die größte Höhendifferenz bezüglich der Richtung (R) senkrecht zu der Hauptebene (H) zwischen dem Niveau (h0) der Schneidkante (5) im Bereich der Schneidecke (4) und dem Niveau des Spanleitstufengrundes (9) im Bereich der Schneidecke (4) gegeben ist.

9. Schneideinsatz nach einem der vorhergehenden Ansprüche, wobei die Oberflächen des ersten Plateaus (11 b), des zweiten Plateaus (12b) und des dritten Plateaus (13b) jeweils im Wesentlichen parallel zu der Hauptebene (H) verlaufen.

10. Schneideinsatz nach einem der vorhergehenden Ansprüche, wobei der Schneideinsatz (1) eine Wendeschneidplatte ist, die zumindest eine zweite Schneidecke (4a) aufweist.

11. Schneideinsatz nach einem der vorhergehenden Ansprüche, wobei der Schneideinsatz (1) als Wendeschneidplatte ausgebildet ist, bei der auch die untere Oberfläche zur spanenden Bearbeitung eines Werkstücks ausgebildet ist.

12. Schneideinsatz nach Anspruch 11, wobei das dritte Plateau (13b) als Auflagefläche für den Schneideinsatz (1) im Schneidwerkzeug, wenn die untere Oberfläche zur spanenden Bearbeitung eingesetzt wird, ausgebildet ist.

13. Verwendung eines Schneideinsatzes nach einem der vorhergehenden Ansprüche zur Bearbeitung eines Werkstücks durch Drehen.

14. Schneidwerkzeug (20) mit einem Schneideinsatz (1) nach einem der Ansprüche 1 bis 12.

**Claims**

1. A cutting insert (1) for a cutting tool for machining a workpiece, having:

   a top surface (2), the main orientation of which defines a main plane (H), a bottom surface, and a peripheral side wall (3) between the top surface (2) and the bottom surface, wherein at least one corner which is rounded in the circumferential direction is formed, said corner being designed as a cutting corner (4) at least on the side of the top surface (2), wherein an edge in the region of the cutting corner (4) and at least one edge (6) adjoining the cutting corner (4), said edges extending in each case between the side wall (3) and the top surface (2), form a cutting edge (5);
   wherein the following are formed in the following order in a radial direction (Q) which extends in the main plane (H) from the cutting corner (4) to a centre (Z) of the cutting insert (1):

      a declining rake face (8),
      a chip geometry floor (9; 9a) adjoining the rake face,
      a first chip geometry (11) adjoining the chip geometry floor (9; 9a) and having a first surface (11 a), which rises with respect to the chip geometry floor (9; 9a), and a first plateau (11 b) adjoining said first surface (11 a),
      a second chip geometry (12) having a second surface (12a), which rises with respect to the first plateau (11 b), and a second plateau (12b) adjoining said second surface (12a), and
      a third chip geometry (13) having a third surface (13a), which rises with respect to the second plateau (12b), and a third plateau (13b) adjoining said third surface (13a),
      **characterized in that** the second chip geometry (12) is narrower than the first chip geometry (11) in a transverse direction that extends perpendicularly to the radial direction (Q) and parallel to the main plane (H).

2. Cutting insert according to Claim 1, wherein a bevel (7) is provided on the cutting edge (5).

3. Cutting insert according to Claim 1 or 2, wherein the first plateau (11 b) is arranged, with regard to a direction (R) perpendicular to the main plane (H), at least partly at a first level below the level (h0) of the cutting edge (5) in the region of the cutting corner (4) and the third plateau (13b) is arranged, with regard to the direction (R) perpendicular to the main plane (H), at least partly at a third level above the level (h0) of the cutting edge (5) in the region of the cutting corner (4).

4. Cutting insert according to one of the preceding claims, wherein the second plateau (12b) is arranged, with regard to a direction (R) perpendicular to the main plane (H), at least partly at the level h0 + h2 or h0 - h2 and wherein

   - $0 \leq h2 \leq 0.25$ times hg,
   - h0 is the level of the cutting edge (5) in the direction (R) in the region of the cutting corner (4),
   - hg is the difference between the level (h0) of the cutting edge (5) and the chip geometry floor (9a) in the direction (R) in the region of the cutting corner (4).

5. Cutting insert according to one of the preceding claims, wherein in the region of the cutting corner (4) there is provided a rake angle (W) which decreases with increasing distance from the cutting corner (4) in a direction along the cutting edge (5) up to an elevation of the chip geometry floor (9b), and wherein the rake angle (W) is formed between the main plane (H) and the rake face (8).

6. Cutting insert according to Claim 5, wherein the rake angle (W) increases again in the direction along the cutting edge (5) after the elevation of the chip geometry floor (9b).

7. Cutting insert according to Claim 5 or 6, wherein - with regard to the direction (R) perpendicular to the main plane (H) - in a region in which the first chip geometry (11) is at the shortest distance from the cutting edge (5), the elevation of the chip geometry floor (9b) has the smallest height difference from the level (h0) of the cutting edge (5) in the region of the cutting corner (4).

8. Cutting insert according to one of the preceding claims, wherein the greatest height difference - with regard to the direction (R) perpendicular to the main plane (H) - between the level (h0) of the cutting edge (5) in the region of the cutting corner (4) and the level of the chip geometry floor (9) is found in the region of the cutting corner (4).

9. Cutting insert according to one of the preceding claims, wherein the surfaces of the first plateau (11 b), of the second plateau (12b) and of the third plateau (13b) each extend substantially parallel to the main plane (H).

10. Cutting insert according to one of the preceding claims, wherein the cutting insert (1) is an indexable insert which has at least a second cutting corner (4a).

11. Cutting insert according to one of the preceding claims, wherein the cutting insert (1) is designed as an indexable insert in which the bottom surface, too, is designed for machining a workpiece.

12. Cutting insert according to Claim 11, wherein the third plateau (13b) is designed as a support surface for the cutting insert (1) in the cutting tool when the bottom surface is used for machining.

13. Use of a cutting insert according to one of the preceding claims for machining a workpiece by turning.

14. Cutting tool (20) having a cutting insert (1) according to one of claims 1 to 12.

**Revendications**

1. Insert de coupe (1) pour un outil de coupe destiné à l'usinage par enlèvement de copeaux d'une pièce à travailler, comprenant une face supérieure (2) dont l'orientation principale définit un plan principal (H), une face inférieure ainsi qu'une paroi latérale (3) de circonférence agencée entre la face supérieure (2) et la face inférieure, dans lequel il est présent au moins un angle arrondi dans le sens circonférentiel, ledit angle étant configuré, au moins du côté de la face supérieure (2), sous forme de coin de coupe (4), tandis qu'une arête dans la zone du coin de coupe (4) et au moins une arête (6) adjacente audit coin de coupe (4) s'étendent chacune entre la paroi latérale (3) et la face supérieure (2) en formant une arête de coupe (5), tandis que les éléments suivants sont conformés, dans l'ordre ci-dessous, dans un sens radial (Q) allant, dans le plan principal (H), depuis le coin de coupe (4) jusqu'à un centre (Z) de l'insert de coupe (1) :

- une face d'attaque (8) descendante,
- un fond de brise-copeaux (9 ; 9a) adjacent à la face d'attaque,
- un premier brise-copeaux (11) adjacent au fond de brise-copeaux (9 ; 9a) et possédant une première face (11a) ascendante et, adjacent à cette dernière, un premier plateau (11b),
- un deuxième brise-copeaux (12) possédant une deuxième face (12a) ascendante par rapport au premier plateau (11b) et, adjacente à cette deuxième face, un deuxième plateau (12b)
- et un troisième brise-copeaux (13) possédant une troisième face (13a) ascendante par rapport au deuxième plateau (12b) et, adjacente à cette troisième face, un troisième plateau (13b),

**caractérisé en ce que** le deuxième brise-copeaux (12) est plus étroit que le premier (11) et ce dans un sens transversal, à savoir perpendiculaire au sens radial (Q) et parallèle au plan principal (H).

2. Insert de coupe selon la revendication 1, **caractérisé par** la présence d'un biseau (7) sur l'arête de coupe (5).

3. Insert de coupe selon la revendication 1 ou 2, **caractérisé en ce que** le premier plateau (11b) est agencé, par rapport à une direction (R) perpendiculaire au plan principal (H), au moins pour partie sur un premier niveau situé en-dessous du niveau (h0) de l'arête de coupe (5), dans la zone du coin de coupe (4), et **en ce que** le troisième plateau (13b) est agencé, par rapport à la direction (R) perpendiculaire au plan principal (H), au moins pour partie sur un troisième niveau au-dessus du niveau (h0) de l'arête de coupe (5), dans la zone du coin de coupe (4).

4. Insert de coupe selon l'une quelconque des revendications précédentes, **caractérisé en ce que** le deuxième plateau (12b) est agencé, par rapport à une direction (R) perpendiculaire au plan principal (H), au moins pour partie sur le niveau h0 + h2 ou h0 - h2 et **en ce que**

- $0 \leq h2 \leq 0{,}25$ fois hg,
- h0 étant le niveau de l'arête de coupe (5) dans la direction (R) dans la zone du coin de coupe (4)
- et hg étant, dans la direction (R) dans la zone du coin de coupe (4), la différence entre le niveau (h0) de l'arête de coupe (5) et le fond de brise-copeaux (9a).

5. Insert de coupe selon l'une quelconque des revendications précédentes, **caractérisé en ce qu'**il est prévu, dans la zone du coin de coupe (4), un angle de dégagement (W) qui, à distance croissante dudit coin de coupe (4), diminue le long de l'arête de coupe (5) jusqu'à une élévation du fond de brise-copeaux (9b), ledit angle de dégagement (W) étant conformé entre le plan principal (H) et la face d'attaque (8).

6. Insert de coupe selon la revendication 5, **caractérisé en ce que** l'angle de dégagement (W) augmente à nouveau le long de l'arête de coupe (5), après l'élévation du fond de brise-copeaux (9b).

7. Insert de coupe selon la revendication 5 ou 6, **caractérisé en ce que** l'élévation du fond de brise-copeaux (9b), vue dans la direction (R) perpendiculaire au plan principal (H), présente la différence de hauteur la plus faible à l'égard du niveau (h0) de l'arête de coupe (5) dans la zone du coin de coupe (4), dans un secteur où la distance du premier brise-copeaux (11) jusqu'à à l'arête de coupe (5) est la plus faible.

8. Insert de coupe selon l'une quelconque des revendications précédentes, **caractérisé en ce que** la plus grande différence de hauteur entre le niveau (h0) de l'arête de coupe (5) dans la zone du coin de coupe (4) et le niveau du fond de brise-copeaux (9), vu dans la direction (R) perpendiculaire au plan principal (H), se situe dans la zone du coin de coupe (4).

9. Insert de coupe selon l'une quelconque des revendications précédentes, **caractérisé en ce que** la surface de chacun des premier (11b), deuxième (12b) et troisième (13b) plateaux s'étend, pour l'essentiel, parallèlement au plan principal (H).

10. Insert de coupe selon l'une quelconque des revendications précédentes, **caractérisé en ce que** ledit insert (1) est une plaquette amovible et dotée d'au moins un second coin de coupe (4a).

11. Insert de coupe selon l'une quelconque des revendications précédentes, **caractérisé en ce que** ledit insert (1) est réalisé sous forme de plaquette amovible dont la face inférieure est également conçue pour l'usinage par enlèvement de copeaux d'une pièce à travailler.

12. Insert de coupe selon la revendication 11, **caractérisé en ce que** le troisième plateau (13b) est configuré en tant que surface d'appui pour l'insert de coupe (1) placé dans l'outil, lorsque la face inférieure est utilisée pour l'usinage par enlèvement de copeaux.

13. Utilisation d'un insert de coupe selon l'une quelconque des revendications précédentes, pour l'usinage d'une pièce par tournage.

14. Outil de coupe (20) équipé d'un insert de coupe (1) selon l'une quelconque des revendications 1 à 12.

**Fig. 1**

**Fig. 2**

**Fig. 3**

**Schnitt C-C**

**Fig. 4**

**Schnitt D-D**

**Fig. 5**

13 { 13a
13b

9c
8
7

W

6

R

3

**Schnitt G-G**

## Fig. 6

13 { 13a
13b

9c
8

W

7

6

R

3

**Schnitt E-E**

## Fig. 7

**IN DER BESCHREIBUNG AUFGEFÜHRTE DOKUMENTE**

**In der Beschreibung aufgeführte Patentdokumente**

- KR 100312957
- WO 2009055218 A1
- JP 2004106150 A